# EUROPÄISCHE PATENTSCHRIFT

(11) **EP 3 327 244 B1**
(45) Veröffentlichungstag und Bekanntmachung des Hinweises auf die Patenterteilung: **29.07.2020**
(21) Anmeldenummer: 17192286.7
(22) Anmeldetag: 21.09.2017
(51) Int. Cl.: E21B 17/00, B08B 9/02

(54) **VORRICHTUNG UND VERFAHREN ZUM REINIGEN ODER SCHMIEREN EINES BOHRGESTÄNGEELE-MENTES SOWIE BOHRANLAGE**
DEVICE AND METHOD FOR CLEANING OR LUBRICATING A DRILL PIPE ELEMENT AND DRILLING RIG
DISPOSITIF ET PROCÉDÉ DE NETTOYAGE OU DE LUBRIFICATION D'UN ÉLÉMENT DE TIGE DE FORAGE AINSI QU'INSTALLATION DE FORAGE

(30) Priorität: 23.11.2016 US 201615360237
(43) Veröffentlichungstag der Anmeldung: 30.05.2018
(73) Patentinhaber: BAUER Deep Drilling GmbH, 86529 Schrobenhausen (DE)
(72) Erfinder: HACKL, Stefan, 86551 Aichach (DE); DIAS, Pedro, 80804 München (DE); OSTERMEIER, Manuel, 85123 Pobenhausen (DE)
(74) Vertreter: Wunderlich & Heim Patentanwälte Partnerschaftsgesellschaft mbB

(56) Entgegenhaltungen:
- US-A- 2 682 068
- US-A- 4 160 457

## Beschreibung

Die Erfindung betrifft eine Vorrichtung zum Reinigen oder Schmieren zumindest eines Verbindungsabschnitts eines Bohrgestängeelementes mit einem Gehäuse und mindestens einer Wascheinrichtung oder Schmiereinrichtung, welche in dem Gehäuse angeordnet ist, gemäß dem Oberbegriff des Anspruchs 1.

Die Erfindung betrifft weiterhin ein Verfahren zum Reinigen oder Schmieren zumindest eines Verbindungsabschnitts eines Bohrgestängeelementes, wobei ein unterer Verbindungsabschnitt eines vertikal angeordneten Bohrgestängeelementes mittels einer Wascheinrichtung gereinigt oder einer Schmiereinrichtung geschiert wird, gemäß dem Oberbegriff des Anspruchs 11.

Die Erfindung betrifft weiterhin eine Bohranlage mit einem Bohrmast, entlang welchem ein Bohrgestängeelement mittels eines Bohrantriebes in den Boden unter Bildung eines Bohrlochs abgebohrt und nach dem Erstellen der Bohrung wieder aus dem Bohrloch gezogen werden kann, gemäß dem Oberbegriff des Anspruchs 10.

Aus der WO 2005/093203 A1 ist eine automatische Reinigungsvorrichtung für Bohrgestänge bekannt. Diese Vorrichtung weist ein Gehäuse mit einer oberen Eintrittsöffnung auf. Durch die obere Eintrittsöffnung können vertikal angeordnete Bohrgestängeelemente mit einem unteren Verbindungsabschnitt von oben in das Gehäuse der Waschvorrichtung eingeführt werden. Beim Einführen wird eine Betätigungsplatte nach unten gedrückt, wobei die Wascheinrichtung und insbesondere Waschdüsen in Betrieb gesetzt werden.

Diese bekannte automatische Wascheinrichtung bedarf einer zuverlässigen Steuerung abhängig von der Länge des Bohrgestängeelementes. So besteht die Gefahr, dass bei Verwendung längerer Bohrgestängeelemente diese auf den Boden des Gehäuses schlagen, was zu Beschädigungen der Vorrichtung oder des Bohrgestängeelementes führen kann.

Eine gattungsbildende Reinigungsvorrichtung ist aus der US 2 682 068 A bekannt. Diese weist ein ringförmiges Gehäuse mit einem Zutrittsschlitz auf. Die Reinigungsvorrichtung ist für eine Handbedienung vorgesehen und weist einen Handgriff auf.

Aus der US 4 160 457 A geht eine hülsenförmige Reinigungsvorrichtung mit axialer Zutrittsrichtung hervor.

Der Erfindung liegt die Aufgabe zugrunde, eine Vorrichtung und ein Verfahren zum Reinigen oder Schmieren eines Verbindungsabschnitts eines Bohrgestängeelementes anzugeben, mit welchen ein Bohrgestängeelement zuverlässig und effizient gereinigt oder geschmiert werden kann.

Weiterhin liegt der Erfindung die Aufgabe zugrunde, eine Bohranlage anzugeben, mit welcher ein effizientes Reinigen oder Schmieren der Bohrgestängeelemente ermöglicht wird.

Die angeführte Aufgabe wird nach der Erfindung zum einen durch eine Vorrichtung zum Reinigen oder Schmieren zumindest eines Verbindungsabschnitts eines Bohrgestängeelementes nach Anspruch 1 gelöst. Diese ist versehen mit einem Gehäuse, einer kanalartigen Ausnehmung, welche sich von mindestens einer Seitenöffnung in mindestens einer Seitenwand des Gehäuses horizontal entlang einer Oberseite des Gehäuses erstreckt und zur Aufnahme zumindest eines Verbindungsabschnitts des Bohrgestängeelementes ausgebildet ist, und mindestens einer Wascheinrichtung oder einer Schmiereinrichtung mit mindestens einer Waschdüse, welche entlang der kanalartigen Ausnehmung angeordnet ist, wobei die kanalartige Ausnehmung zum horizontalen Einfahren zumindest eines unteren Verbindungsabschnitts des Bohrgestängeelementes ausgebildet ist, wenn das Bohrgestängeelement im Wesentlichen vertikal ausgerichtet ist.

Eine Grundidee der Erfindung besteht darin, von einem nur vertikalen Einfahren des Bohrgestängeelementes in eine Reinigungsvorrichtung abzugehen. Vielmehr ist nach der Erfindung ein Gehäuse mit einer kanalartigen, im Wesentlichen horizontal verlaufenden Ausnehmung vorgesehen, welche mindestens eine Seitenöffnung in mindestens einer Seitenwand des Gehäuses aufweist. Somit kann zumindest der Verbindungsabschnitt eines Bohrgestängeelementes bei einer vertikalen Anordnung seitlich und in horizontaler Richtung in das Gehäuse eingeschwenkt werden. Dabei ist die Gefahr von Beschädigungen des Gehäuses auch bei unterschiedlichen Bohrgestängelängen reduziert. Zudem können abhängig von der Länge der kanalartigen Ausnehmung eine oder mehrere Wascheinrichtungen und/oder Schmiereinrichtungen angeordnet sein. Durch ein horizontales Verfahren des Bohrgestängeelementes entlang der Ausnehmung kann so ein effizientes Reinigen oder Schmieren zumindest des Verbindungsabschnittes des Bohrgestängeelementes erfolgen.

Es ist erfindungsgemäß, dass an der kanalartigen Ausnehmung eine Schalteinrichtung vorgesehen ist, durch welche beim Eintreten des Bohrgestängeelementes in die Ausnehmung die Wascheinrichtung oder Schmiereinrichtung eingeschaltet und beim Verlassen wieder ausgeschaltet wird. Somit wird die Einrichtung nur dann in Betrieb gesetzt, wenn sich tatsächlich ein Bohrgestängeelement in dem Gehäuse der Reinigungsvorrichtung befindet. Hierdurch kann Energie und Reinigungsfluid, insbesondere Wasser, eingespart werden.

Gemäß einer bevorzugten Weiterbildung der Erfindung ist es vorteilhaft, dass die Schalteinrichtung mindestens eine verstellbar gelagerte Betätigungsstange aufweist, welche zwischen einer Ausschaltposition im Bereich der Ausnehmung und einer Einschaltposition verstellbar ist, wobei in der Einschaltposition die Wascheinrichtung oder die Schmiereinrichtung eingeschaltet und in der Ausschaltposition wieder ausgeschaltet ist. Die Betätigungsstange reicht in der Ausschaltposition in den Bereich der Ausnehmung hinein. Durch Eintreten des Bohrgestängeelementes wird die Betätigungsstange von der Ausschaltposition in eine Einschaltposition bewegt, in welcher die Betätigungsstange das Bohrgestängeelement nicht mehr behindert. Bei Erreichen der Einschaltposition wird die Wascheinrichtung oder Schmiereinrichtung in Betrieb gesetzt. Vorzugsweise ist die Betätigungsstange federvorgespannt, so dass bei Verlassen des Bohrgestängeelementes der Ausnehmung die Betätigungsstange wieder von der Einschaltposition in die Ausschaltposition zurückgeschwenkt wird. Hierdurch wird dann die Einrichtung wieder außer Betrieb gesetzt.

Nach einer weiteren vorteilhaften Ausführungsvariante der Erfindung ist es vorgesehen, dass mindestens zwei Betätigungsstangen angeordnet sind, welche jeweils zu einer Seite entlang der kanalartigen Ausnehmung verlaufen. Die Betätigungsstangen verlaufen somit im Wesentlichen parallel zu der kanalartigen Ausnehmung. Dies hat den Vorteil, dass selbst bei einer größeren Länge der kanalartigen Ausnehmung, von 1 m und mehr die Betätigungsstangen durch das Bohrgestängeelement an jeder Stelle der kanalartigen Ausnehmung in die Einschaltposition gedrückt werden. Durch die Anordnung von zwei Betätigungsstangen wird eine zuverlässige Betätigung der Wascheinrichtung sichergestellt.

Vorzugsweise sind dabei die Betätigungsstangen unter Federvorspannung gelagert, wobei durch die Federvorspannung die Betätigungsstange in die Ausschaltposition gedrückt ist. Beim Austreten des Bohrgestängeelementes aus der Ausnehmung des Gehäuses werden so die Betätigungsstangen wieder in den Bereich der kanalartigen Ausnehmung in die Ausschaltposition gedrückt. Damit wird der Betrieb der Wascheinrichtung gestoppt und somit auch der Verbrauch von Reinigungsfluid.

Weiterhin ist es nach einer Ausführungsvariante der Erfindung vorteilhaft, dass beim Eintreten des Bohrgestängeelementes in die kanalartige Ausnehmung die Betätigungsstangen von der Ausschaltposition in die Einschaltposition verstellt werden. Somit wird zuverlässig beim Eintreten des Bohrgestängeelementes in die Ausnehmung im Gehäuse die Wascheinrichtung in Betrieb gesetzt.

Grundsätzlich kann die Wascheinrichtung in beliebiger Weise ausgestaltet sein und verschiedenste Reinigungselemente aufweisen. Besonders vorteilhaft ist es nach einer Weiterbildung der Erfindung, dass die Wascheinrichtung mindestens eine Waschdüse aufweist, welche ausgebildet ist, einen Reinigungsstrahl eines Reinigungsfluides auf das Bohrgestängeelement zu richten. Mit der Waschdüse kann insbesondere ein Reinigungsfluid, insbesondere Wasser, mit Hochdruck auf das Bohrgestängeelement gerichtet werden. Somit kann insbesondere ein Verbindungsbereich des Bohrgestängeelementes mit einem empfindlichen Gewinde zuverlässig von anhaftendem Schmutz oder Erde gereinigt werden. Dies reduziert die Gefahr einer Korrosion sowie von Beschädigungen oder Problemen bei einem abermaligen Verbinden der Bohrgestängeelemente.

Für ein gutes Reinigungsergebnis ist es nach einer weiteren Ausführungsform der Erfindung vorteilhaft, dass die Wascheinrichtung mindestens eine rotierend angetriebene Bürste zum Reinigen des Bohrgestängeelementes aufweist. Somit kann alternativ oder ergänzend zu dem Reinigen mit einem Reinigungsstrahl eine mechanische Reinigung erfolgen. Vorzugsweise sind mehrere rotierende Bürsten vorgesehen, welche das Bohrgestängeelement von zwei Seiten beaufschlagen und reinigen.

Eine weitere bevorzugte Ausführungsvariante der Erfindung besteht darin, dass die Schmiereinrichtung mindestens eine Auftragseinheit zum Auftragen eines Schmiermittels zumindest auf den Verbindungsabschnitt des Bohrgestängeelementes aufweist. Das Schmiermittel kann dabei ein Schmierfett oder ein Schmieröl sein. Dies ist vorzugsweise mit einem Korrosionsschutzwirkstoff versetzt. Durch das Schmiermittel kann nicht nur einfacher Korrosionsschutz sondern auch ein leichteres Verschrauben der Bohrgestängeelemente bei einem weiteren Bohrarbeitsgang erreicht werden. Die Schmiereinrichtung kann Düsen zum Aufsprühen des Schmiermittels oder andere Auftragsorgane wie etwa Bürsten, Auftragsrakel etc. aufweisen. Die Schmiereinrichtung kann alternativ oder vorzugsweise ergänzend zu der Wascheinrichtung vorgesehen sein.

Grundsätzlich kann die längliche oder kanalartige Ausnehmung entlang der Oberseite des Gehäuses der erfindungsgemäßen Vorrichtung linear oder bogenförmig ausgebildet sein. In vorteilhafter Weise erstreckt sich die Ausnehmung quer durch das Gehäuse von einer ersten Öffnung in einer ersten Seitenwand zu einer Öffnung in einer zweiten Seitenwand, wobei bei Eintritt des Bohrgestängeelementes in die Ausnehmung durch die erste Öffnung die Wascheinrichtung betätigt und bei Austritt aus der zweiten Öffnung die Wascheinrichtung abgeschaltet ist und wobei bei Eintritt des Bohrgestängeelementes in die Ausnehmung durch die zweite Öffnung die Schmiereinrichtung betätigt und bei Austritt aus der zweiten Öffnung die Schmiereinrichtung wieder abgeschaltet ist. Somit kann das Bohrgestängeelement auf einem Transportweg das Gehäuse durchlaufen. Somit kann die Vorrichtung etwa auf einem Transportweg zwischen einem Bohrmast und einem Bohrgestängemagazin angeordnet sein. Hierdurch werden ein Transportweg und auch die Handhabungszeit beim Ausbau der Bohrgestängeelemente reduziert. Auf dem Weg vom Bohrmast zum Magazin kann die Wascheinrichtung betätigt werden, während beim Weg vom Magazin zum Bohrmast die Schmiereinrichtung aktiviert wird.

Die eingangs genannte Aufgabe wird weiter durch eine Bohranlage mit einem Bohrmast gelöst, entlang welchem mindestens ein Bohrgestängeelement mittels eines Bohrantriebes in den Boden unter Bildung eines Bohrlochs abgebohrt und nach dem Erstellen der Bohrung wieder aus dem Bohrloch gezogen werden kann, wobei eine Handhabungseinrichtung vorgesehen ist, mit welcher ein gezogenes Bohrgestängeelement aufgenommen und von dem Bohrmast wegtransportiert werden kann, wobei die zuvor beschriebene Vorrichtung zum Reinigen zumindest eines Verbindungsabschnittes eines Bohrgestängeelementes vorgesehen ist. Mit der kranartigen Handhabungseinrichtung kann dabei ein Bohrgestängeelement an seiner Oberseite gegriffen und zu einem Bohrgestängemagazin transportiert werden. Auf dem Transportweg kann zumindest der untere Abschnitt des Bohrgestängeelementes die Vorrichtung durchlaufen und ein unterer Verbindungabschnitt kann dabei effizient gereinigt oder geschmiert werden.

Mit dieser Bohranlage lässt sich so ein effizientes Bohrverfahren durchführen, da die Bohrgestängeelemente beim Zurückführen in das Bohrgestängemagazin zuverlässig gereinigt und/oder beim Hinweg zum Bohrmast auch geschmiert werden können.

Die vorstehend genannte Aufgabe kann weiterhin durch ein Verfahren zum Reinigen oder Schmieren zumindest eines Verbindungsabschnitts eines Bohrgestängeelementes gelöst werden, wobei ein unterer Verbindungsabschnitt eines vertikal angeordneten Bohrgestängeelementes durch die mindestens eine Seitenöffnung in der mindestens einen Seitenwand des Gehäuses in die kanalartige Ausnehmung eingefahren wird, welche sich horizontal entlang einer Oberseite des Gehäuses erstreckt, wobei in der kanalartigen Ausnehmung zumindest der Verbindungsabschnitt des Bohrgestängeelementes mittels einer Wascheinrichtung gereinigt oder einer Schmiereinrichtung geschmiert wird. Mit dem erfindungsgemäßen Verfahren können die Vorteile erzielt werden, welche zuvor im Zusammenhang mit der Vorrichtung beschrieben worden sind.

Eine vorteilhafte Verfahrensvariante der Erfindung besteht darin, dass zumindest der Verbindungsabschnitt des Bohrgestängeelementes in die kanalartige Ausnehmung durch eine erste Öffnung in einer Seitenwand des Gehäuses eintritt und entlang der kanalartigen Ausnehmung verfahren und gereinigt oder geschmiert wird, wobei das Bohrgestängeelement aus der kanalartigen Ausnehmung an einer zweiten Öffnung in einer zweiten Seitenwand des Gehäuses austritt. Damit kann das Bohrgestängeelement im Wesentlichen horizontal linear durch die kanalartige Ausnehmung in dem Gehäuse verfahren werden. Somit kann ein Reinigen oder Schmieren unmittelbar auf dem Transportweg zwischen Bohrmast und Bohrgestängemagazin erfolgen.

Neben einem Reinigen des Verbindungsabschnitts des Bohrgestängeelementes ist es nach einer Weiterbildung des erfindungsgemäßen Verfahrens vorteilhaft, dass zumindest der Verbindungsabschnitt des Bohrgestängeelementes nach dem Waschen mit einem Schmiermittel versehen wird. Dabei sind Wascheinrichtung und Schmiereinrichtung kombiniert.

### Kurze Beschreibung der Zeichnungen

Die Erfindung wird nachfolgend anhand von bevorzugten Ausführungsformen weiter beschrieben, welche schematisch in den Zeichnungen dargestellt sind. In den Zeichnungen zeigen:
- Fig. 1: eine perspektivische Ansicht einer erfindungsgemäßen Vorrichtung zum Reinigen und Schmieren;
- Fig. 2: eine Vorderansicht der Vorrichtung von Fig. 1;
- Fig. 3: eine geschnittene perspektivische Teilansicht der Vorrichtung von Figuren 1 und 2 mit einem teilweise dargestellten Bohrgestängelement; und
- Fig. 4: eine perspektivische Teilansicht einer erfindungsgemäßen Bohranlage mit der erfindungsgemäßen Vorrichtung der Figuren 1 bis 3.

### Detaillierte Beschreibung von bevorzugten Ausführungsformen

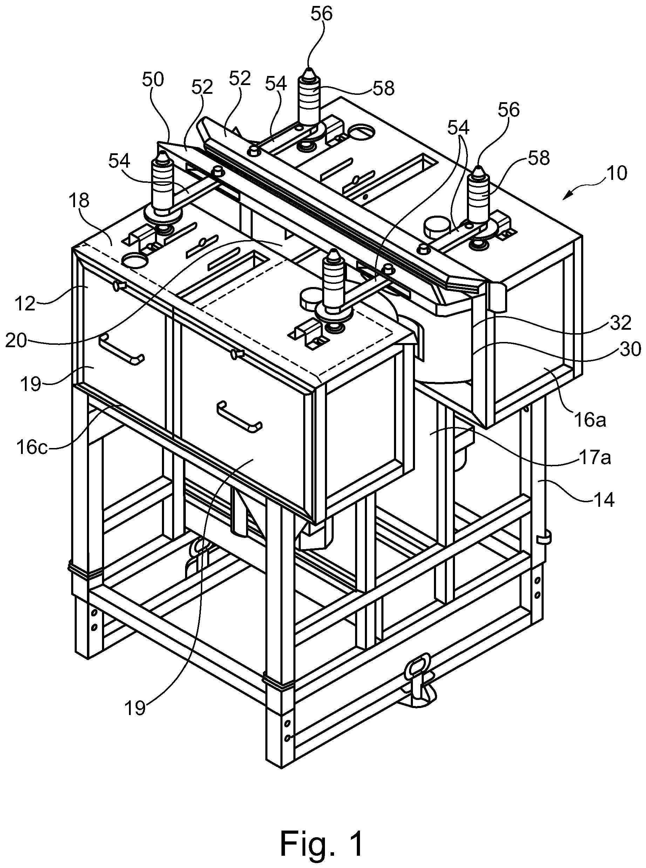

Gemäß den Figuren 1, 2 und 3 ist eine erfindungsgemäße Vorrichtung 10 zum Reinigen und/oder Schmieren eines Bohrgestängeelementes 5 mit einem unteren Verbindungsabschnitt 6 vorgesehen. Die Vorrichtung 10 weist ein kastenförmiges Gehäuse 12 auf einem Gestell 14 auf. Das Gehäuse 12 ist aus Seitenwänden 16 und einer Oberseite 18 gebildet. In einem Mittenbereich des Gehäuses 12 verläuft eine Ausnehmung 20 von einer vorderen ersten Seitenwand 16a mit einer mittigen ersten Öffnung 17a zu einer hinteren zweiten Seitenwand 16b mit einer mittigen zweiten Öffnung 17b. Die Ausnehmung 20 ist so ausgebildet, dass der Verbindungsabschnitt 6 eines Bohrgestängeelementes 5 im Wesentlichen horizontal durch die kanalartige Ausnehmung 20 von der ersten Öffnung 17a bis zur zweiten Öffnung 17b oder umgekehrt bewegt werden kann.

Entlang der kanalartigen Ausnehmung 20 ist eine Wascheinrichtung 30 mit zwei gegenüberliegenden Bürsten 32 vorgesehen. Die Bürsten 32 sind jeweils um eine vertikal gerichtete Drehachse drehend gelagert und über einen untenliegenden Drehantrieb 36 drehend angetrieben. Die Wascheinrichtung 30 ist dabei nahe an der ersten Öffnung 17a der ersten Seitenwand 16a angeordnet.

Angrenzend an die zweite Öffnung 17b in der zweiten Seitenwand 16b ist eine Schmierenrichtung 40 mit einer Schmierdüse 42 jeweils zu beiden Seiten der kanalartigen Ausnehmung 20 vorgesehen. In der länglichen Seitenwand 16c des Gehäuses 14 sind Zugangstüren 19 oder Schubladen angeordnet, welche einen Zugang zu der Wascheinrichtung 30 beziehungsweise der Schmiereinrichtung 40 von der Seite erlauben.

Zum Aktivieren beziehungsweise Deaktivieren der Wascheinrichtung 30 beziehungsweise der Schmiereinrichtung 40 ist an der Oberseite 16 des Gehäuses 12 eins Schalteinrichtung 50 angeordnet. Die Schalteinrichtung 50 weist zwei parallel angeordnete Betätigungsstangen 52 auf, welche sich oberhalb und entlang der kanalartigen Ausnehmung 20 erstrecken. Die Betätigungsstangen 52 sind jeweils an zwei horizontal gerichteten Schwenkhebeln 54 angelenkt, welche wiederum um je eine vertikal gerichtete Schwenkachse 56 schwenkbar gelagert sind.

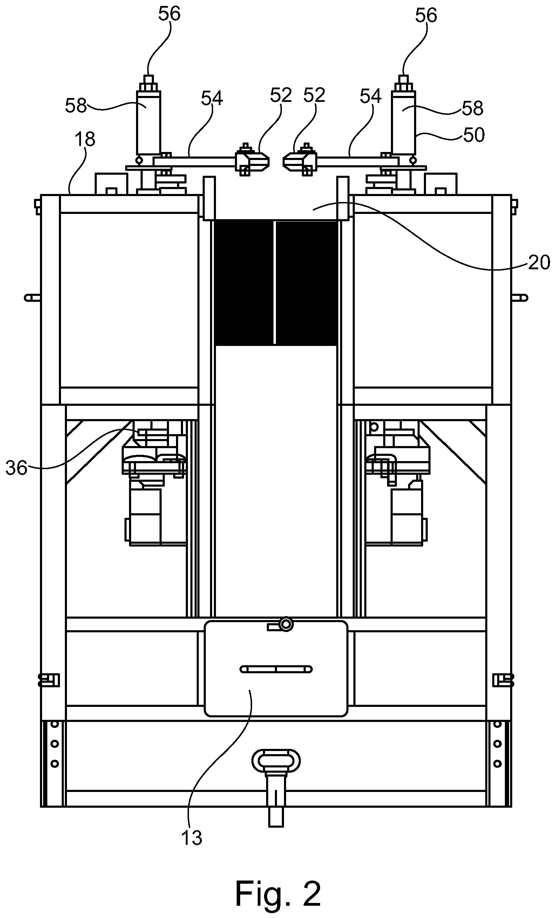

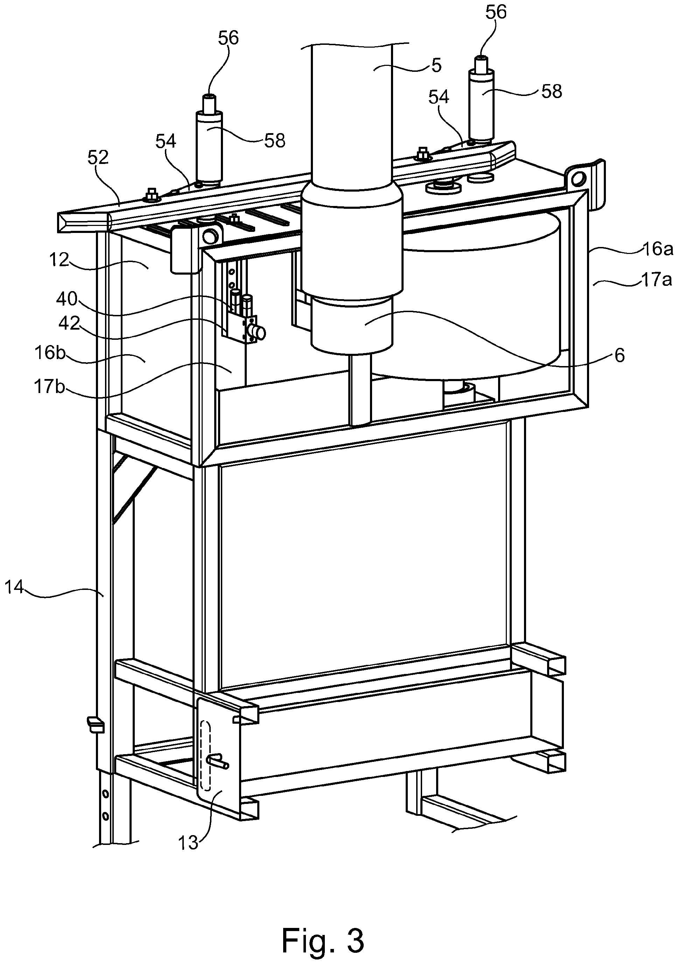

Gemäß Fig. 1 und Fig. 2 befinden sich die Betätigungsstangen 52 in einer Ausschaltposition oberhalb der Ausnehmung 20, wobei die Wascheinrichtung 30 und die Schmiereinrichtung 40 ausgeschaltet sind. An ihren Endbereichen weisen die Betätigungsstangen 52 Einlaufschrägen auf. Bei einem horizontalen Einfahren eines Bohrgestängeelementes 5, wie in Fig. 3 dargestellt, werden die beiden Betätigungsstangen 52 jeweils zur Seite um die Schwenkachsen 56 verschwenkt. Durch dieses Verschwenken aktiviert die Schalteinrichtung 50 die Wascheinrichtung 30 und die Schmiereinrichtung 40. Bei der Wascheinrichtung 30 werden die Bürsten 32 in Rotation versetzt, wobei über eine nicht dargestellte Waschdüse eine Waschflüssigkeit zusätzlich aufgebracht werden kann. Hierdurch wird ein Verbindungsabschnitt 6 des Bohrgestänges 5, insbesondere ein Gewindebereich, nach und/oder vor einem Bohrbetrieb von anhaftenden Verschmutzungen befreit.

Nach einem Vorbeilauf des Bohrgestängeelementes 5 an der Wascheinrichtung 30 gelangt der Verbindungsabschnitt 6 in den Bereich der Schmiereinrichtung 40, wobei mittels einer Schmierdüse 42ein Schmierfett oder ein Schmieröl auf den Gewindebereich von einer oder mehreren Seiten aufgetragen wird. Die Schmierung kann gleichzeitig als ein Korrosionsschutz beim Lagern der Bohrgestängeelemente 5 in einem Bohrgestängemagazin dienen. Das Schmierfett erleichtert auch ein späteres Zusammenschrauben von Bohrgestängeelementen 5 zu einem Bohrstrang. Die Wascheinrichtung 30 und die Schmiereinrichtung 40 können auch zeitlich versetzt oder differenziert betätigt werden.

An den Schwenkachsen 56 sind jeweils Spanngehäuse 58 mit einer innenliegenden, nicht dargestellten Spannfeder vorgesehen. Beim Verschwenken der Betätigungsstangen 52 von der innenliegenden Ausschaltposition in die außenliegende Einschaltposition werden die Spannfedern in den Spanngehäusen 58 gespannt. Nach einem Austritt des Bohrgestängeelementes 5 aus der zweiten Öffnung 17b in der zweiten Seitenwand 16b werden so die Betätigungsstangen 52 wieder federgespannt von der Einschaltposition in die innenliegende Ausschaltposition zurückgestellt. Hierdurch werden die Wascheinrichtung 30 und die Schmiereinrichtung 40 ausgeschaltet.

In einem untern Bereich des Gestells 14 kann eine Mittenschublade 13 vorgesehen sein, welche von oben Schmutz aufnehmen kann. Zu bestimmten Zeitpunkten kann die Schublade 13 entleert werden.

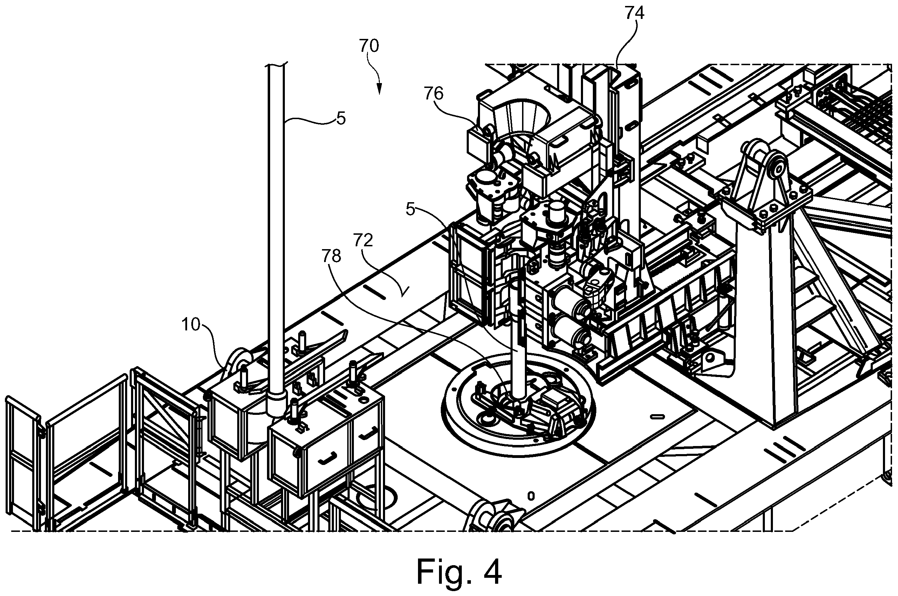

In Fig. 4 ist eine erfindungsgemäße Bohranlage 70 mit einer horizontalen Bohrplattform 72 und einem daran vertikal angeordneten Bohrmast 74 dargestellt. Der grundsätzliche Aufbau einer Bohranlage 70, welche etwa zum Öl- oder Gasbohren eingesetzt wird, ist bekannt. An einem Bohrloch 78 wird ein Bohrstrang aus einer Vielzahl von Bohrgestängeelementen 5 durch Zusammenschrauben gebildet. Hierfür sind entlang des Bohrmastes 74 grundsätzlich bekannte Spann- und Antriebseinrichtungen 76 angeordnet.

Gemäß der Erfindung kann beim Transport eines Bohrgestängeelementes zu oder von dem Bohrloch 78 eine erfindungsgemäße Vorrichtung 10 zum Reinigen und Schmieren des Bohrgestängeelementes 5 angeordnet sein. Auf diese Weise kann ein Bohrgestängeelement 5 beim Transport von oder zu einem hier nicht näher dargestellten Bohrgestängemagazin gereinigt und geschmiert werden.

Bei der Darstellung gemäß Fig. 4 durchläuft ein Bohrgestängeelement 5 mit seinem unteren Verbindungsabschnitt 6 zunächst die Wascheinrichtung 30 der Vorrichtung 10. Anschließend erfolgt ein Schmieren mittels der Schmiereinrichtung 40 in der Vorrichtung 10. Auf diese Weise kann ein gereinigtes und geschmiertes Bohrgestängeelement 5 leicht und mit hoher Betriebssicherheit zu dem Bohrstrang zusammengesetzt werden.

## Patentansprüche

1. Vorrichtung zum Reinigen oder Schmieren zumindest eines Verbindungsabschnitts (6) eines Bohrgestängeelementes (5), mit
- einem Gehäuse (12),
- einer Ausnehmung (20), welche sich von mindestens einer Seitenöffnung in mindestens einer Seitenwand (16) des Gehäuses (12) horizontal entlang einer Oberseite (18) des Gehäuses (12) erstreckt und zur Aufnahme zumindest eines Verbindungsabschnitts (6) des Bohrgestängeelementes (5) ausgebildet ist, und
- mindestens einer Wascheinrichtung (30) oder einer Schmiereinrichtung (40), welche entlang der Ausnehmung (20) angeordnet ist,
- wobei die Ausnehmung (20) zum horizontalen Einfahren zumindest eines unteren Verbindungsabschnitts (6) des Bohrgestängeelementes (5) ausgebildet ist, wenn das Bohrgestängeelement (5) im Wesentlichen vertikal ausgerichtet ist.
**dadurch gekennzeichnet,**
**dass** die Ausnehmung (20) kanalartig mit einer ersten Öffnung (17a) und einer zweiten Öffnung (17b) ausgebildet ist und
**dass** an der kanalartigen Ausnehmung (20) eine Schalteinrichtung (50) vorgesehen ist, durch welche beim Eintreten des Bohrgestängeelementes (5) in die Ausnehmung (20) die Wascheinrichtung (30) oder die Schmiereinrichtung (40) eingeschaltet und beim Verlassen der Ausnehmung die Wascheinrichtung (30) oder die Schmiereinrichtung (40) ausgeschaltet wird.

2. Vorrichtung nach Anspruch 1,
**dadurch gekennzeichnet ,**
**dass** die Schalteinrichtung (50) mindestens eine verstellbar gelagerte Betätigungsstange (52) aufweist, welche zwischen einer Ausschaltposition im Bereich der Ausnehmung (20) und einer Einschaltposition verstellbar ist, wobei in der Einschaltposition die Wascheinrichtung (30) oder Schmiereinrichtung (40) eingeschaltet und in der Ausschaltposition die Wascheinrichtung (30) oder die Schmiereinrichtung (40) ausgeschaltet ist.

3. Vorrichtung nach Anspruch 2,
**dadurch gekennzeichnet,**
**dass** mindestens zwei Betätigungsstangen (52) angeordnet sind, welche jeweils zu einer Seite entlang der kanalartigen Ausnehmung (20) verlaufen.

4. Vorrichtung nach Anspruch 3,
**dadurch gekennzeichnet,**
**dass** die Betätigungsstangen (52) unter Federvorspannung gelagert sind, wobei durch die Federvorspannung die Betätigungsstange (52) in die Ausschaltposition gedrückt ist.

5. Vorrichtung nach Anspruch 4,
**dadurch gekennzeichnet,**
**dass** beim Eintreten des Bohrgestängeelementes (5) in die kanalartige Ausnehmung (20) die Betätigungsstangen (52) von der Ausschaltposition in die Einschaltposition verstellt sind.

6. Vorrichtung nach Anspruch 1,
**dadurch gekennzeichnet,**
**dass** die Wascheinrichtung (30) mindestens eine Waschdüse (34) aufweist, welche ausgebildet ist, einen Reinigungsstrahl eines Reinigungsfluides auf das Bohrgestängeelement (5) zu richten.

7. Vorrichtung nach Anspruch 1,
**dadurch gekennzeichnet,**
**dass** die Wascheinrichtung (30) mindestens eine rotierend angetriebene Bürste (32) zum Reinigen des Bohrgestängeelementes (5) aufweist.

8. Vorrichtung nach Anspruch 1,
**dadurch gekennzeichnet,**
**dass** die Schmiereinrichtung (40) mindestens eine Auftragseinheit zum Auftragen eines Schmiermittels zumindest auf den Verbindungsabschnitt (6) des Bohrgestängeelementes (5) aufweist.

9. Vorrichtung nach Anspruch 1,
**dadurch gekennzeichnet,**
**dass** die Ausnehmung (20) quer durch das Gehäuse (12) von der ersten Öffnung (17a) in einer ersten Seitenwand (16a) zu einer zweiten Öffnung (17b) in einer zweiten Seitenwand (16b) erstreckt,
**dass** bei Eintritt des Bohrgestängeelementes (5) in die Ausnehmung (20) durch die erste Öffnung (17a) die Wascheinrichtung (30) betätigt und bei Austritt aus der zweiten Öffnung (17b) die Wascheinrichtung (30) abgeschaltet ist, und
**dass** bei Eintritt des Bohrgestängeelementes (5) in die Ausnehmung (20) durch die zweite Öffnung (17b) die Schmiereinrichtung (40) betätigt und bei Austritt aus der zweiten Öffnung (17b) die Schmiereinrichtung (40) wieder abgeschaltet ist.

10. Bohranlage mit einem Bohrmast, entlang welchem mindestens ein Bohrgestängeelement (5) mittels eines Bohrantriebes in den Boden unter Bildung eines Bohrlochs abgebohrt und nach dem Erstellen der Bohrung wieder aus dem Bohrloch gezogen werden kann,
wobei eine Handhabungseinrichtung vorgesehen ist, mit welcher ein gezogenes Bohrgestängeelement (5) aufgenommen und von dem Bohrmast wegtransportiert werden kann,
wobei eine Vorrichtung (10) nach Anspruch 1 vorgesehen ist.

11. Verfahren zum Reinigen oder Schmieren zumindest eines Verbindungsabschnitts (6) eines Bohrgestängeelementes mit einer Vorrichtung nach Anspruch 1,
wobei ein unterer Verbindungsabschnitt (6) eines vertikal angeordneten Bohrgestängeelementes (5) durch die mindestens eine Seitenöffnung (17a) in der mindestens einen Seitenwand (16a) des Gehäuses (12) in die kanalartige Ausnehmung (20) eingefahren wird, welche sich horizontal entlang einer Oberseite (18) des Gehäuses (12) erstreckt,
wobei in der kanalartigen Ausnehmung (20) zumindest der Verbindungsabschnitt (6) des Bohrgestängeelementes (5) mittels einer Wascheinrichtung (30) gereinigt oder mittels einer Schmiereinrichtung (40) geschmiert wird.

12. Verfahren nach Anspruch 11,
**dadurch gekennzeichnet,**
**dass** zumindest der Verbindungsabschnitt (6) des Bohrgestängeelementes (5) in die kanalartige Ausnehmung (20) durch eine erste Öffnung (17a) in einer ersten Seitenwand (16a) des Gehäuses (12) eintritt und entlang der kanalartigen Ausnehmung (20) verfahren und gereinigt oder geschmiert wird,
**dass** das Bohrgestängeelement (5) aus der kanalartigen Ausnehmung (20) an einer zweiten Öffnung (17b) in einer zweiten Seitenwand (16b) des Gehäuses (12) austritt.

13. Verfahren nach Anspruch 11,
**dadurch gekennzeichnet,**
**dass** zumindest der Verbindungsabschnitt (6) des Bohrgestängeelementes (5) nach dem Waschen mit einem Schmiermittel versehen wird.

## Claims

1. Device for cleaning or lubricating at least a connecting section (6) of a drill rod element (5), with
- a housing (12),
- a recess (20), which extends from at least one side opening in at least one side wall (16) of the housing (12) in a horizontal direction along an upper side (18) of the housing (12) and is designed for receiving at least a connecting section (6) of the drill rod element (5), and
- at least one washing means (30) or lubricating means (40) which is arranged along the recess (20),
- wherein the recess (20) is designed for horizontal insertion of at least a lower connecting section (6) of the drill rod element (5) when the drill rod element (5) is substantially in vertical alignment
**characterized in that**
the recess (20) is designed channel-like with a first opening (17a) und a second opening (17b), and
that on the channel-like recess (20) a switch means (50) is provided, by which, on entry of the drill rod element (5) into the recess (20), the washing means (30) or lubricating means (40) is switched on and, on exit from the recess, the washing means (30) or lubricating means (40) is switched off.

2. Device according to claim 1,
**characterized in that**
the switch means (50) has at least one adjustably supported actuating bar (52), which is adjustable between a switch-off position in the region of the recess (20) and a switch-on position, wherein in the switch-on position the washing means (30) or lubricating means (40) is switched on and in the switch-off position the washing means (30) or lubricating means (40) is switched off.

3. Device according to claim 2,
**characterized in that**
at least two actuating bars (52) are arranged which each run on one side along the channel-like recess (20).

4. Device according to claim 3,
**characterized in that**
the actuating bars (52) are supported under spring pre-tension, wherein through the spring pre-tension the actuating bar (52) is pressed into the switch-off position.

5. Device according to claim 4,
**characterized in that**
on entry of the drill rod element (5) into the channel-like recess (20) the actuating bars (52) are adjusted from the switch-off position into the switch-on position.

6. Device according to claim 1,
**characterized in that**
the washing means (30) has at least one washing nozzle (34) which is designed to direct a cleaning jet of a cleaning fluid onto the drill rod element (5).

7. Device according to claim 1,
**characterized in that**
the washing means (30) has at least one brush (32) driven in a rotating manner for cleaning the drill rod element (5).

8. Device according to claim 1,
**characterized in that**
the lubricating means (40) has at least one application unit for applying a lubricant at least to the connecting section (6) of the drill rod element (5).

9. Device according to claim 1,
**characterized in that**
the recess (20) extends transversely across the housing (12) from the first opening (17a) in a first side wall (16a) to a second opening (17b) in a second side wall (16b),
**in that** on entry of the drill rod element (5) into the recess (20) through the first opening (17a) the washing means (30) is actuated and on exit from the second opening (17b) the washing means (30) is switched off, and
**in that** on entry of the drill rod element (5) into the recess (20) through the second opening (17b) the lubricating means (40) is actuated and on exit from the second opening (17b) the lubricating means (40) is switched off again.

10. Drilling rig with a drill mast, along which at least one drill rod element (5) can be drilled into the ground by means of a drill drive while a borehole is being formed and withdrawn from the borehole after production of the bore,
wherein a handling means is provided, with which a withdrawn drill rod element (5) can be received and transported away from the drill mast,
wherein a device (10) according to claim 1 is provided.

11. Method for cleaning or lubricating at least a connecting section (6) of a drill rod element with a device according to claim 1,
wherein a lower connecting section (6) of a vertically arranged drill rod element (5) is inserted through the at least one side opening (17a) in the at least one side wall (16a) of the housing (12) into the channel-like recess (20) which extends horizontally along an upper side (18) of the housing (12),
wherein in the channel-like recess (20) at least the connecting section (6) of the drill rod element (5) is cleaned by means of a washing means (30) or lubricated by means of a lubricating means (40).

12. Method according to claim 11,
**characterized in that**
at least the connecting section (6) of the drill rod element (5) enters the channel-like recess (20) through a first opening (17a) in a first side wall (16a) of the housing (12) and is moved and cleaned or lubricated along the channel-like recess (20),
**in that** the drill rod element (5) exits from the channel-like recess (20) at a second opening (17b) in a second side wall (16b) of the housing (12).

13. Method according to claim 11,
**characterized in that**
at least the connecting section (6) of the drill rod element (5) is provided with a lubricant after washing.

## Revendications

1. Dispositif de nettoyage ou de lubrification d'au moins une section de liaison (6) d'un élément de tige de forage (5), comportant :
- un boîtier (12),
- un évidement (20), lequel s'étend depuis au moins une ouverture latérale dans au moins une paroi latérale (16) du boîtier (12) de manière horizontale le long d'un côté supérieur (18) du boîtier (12) et est réalisé pour recevoir au moins une section de liaison (6) de l'élément de tige de forage (5), et
- au moins un système de lavage (30) ou un système de lubrification (40), lequel est disposé le long de l'évidement (20),
- l'évidement (20) étant réalisé pour l'introduction horizontalement d'au moins une section de liaison (6) inférieure de l'élément de tige de forage (5) quand l'élément de tige de forage (5) est orienté de manière essentiellement verticale,
**caractérisé en ce que**
l'évidement (20) est réalisé à la manière d'un canal avec une première ouverture (17a) et une deuxième ouverture (17b), et
**en ce qu'**est prévu au niveau de l'évidement (20) de type canal un système de commutation (50), par lequel, lors de l'introduction de l'élément de tige de forage (5) dans l'évidement (20), le système de lavage (30) ou le système de lubrification (40) est activé et, lorsqu'il quitte l'évidement, le système de lavage (30) ou le système de lubrification (40) est désactivé.

2. Dispositif selon la revendication 1,
**caractérisé en ce que**
le système de commutation (50) présente au moins une tige d'actionnement (52) montée de manière à pouvoir être ajustée, laquelle peut être ajustée entre une position de désactivation dans la zone de l'évidement (20) et une position d'activation, , le système de lavage (30) ou le système de lubrification (40) étant activé dans la position d'activation et le système de lavage (30) ou le système de lubrification (40) étant désactivé dans la position de désactivation.

3. Dispositif selon la revendication 2,
**caractérisé en ce que**
au moins deux tiges d'actionnement (52) sont disposées, lesquelles s'étendent chacune vers un côté le long de l'évidement (20) de type canal.

4. Dispositif selon la revendication 3,
**caractérisé en ce que**
les tiges d'actionnement (52) sont montées sous une précontrainte de ressort, de telle manière que la tige d'actionnement (52) est poussée dans la position de désactivation par la précontrainte de ressort.

5. Dispositif selon la revendication 4,
**caractérisé en ce que**
lors de l'introduction de l'élément de tige de forage (5) dans l'évidement (20) de type canal, les tiges d'actionnement (52) passent de la position de désactivation dans la position d'activation.

6. Dispositif selon la revendication 1,
**caractérisé en ce que**
le système de lavage (30) présente au moins une buse de lavage (34), laquelle est réalisée pour diriger un jet de nettoyage d'un fluide de nettoyage sur l'élément de tige de forage (5).

7. Dispositif selon la revendication 1,
**caractérisé en ce que**
le système de lavage (30) présente au moins une brosse (32) entraînée en rotation pour nettoyer l'élément de tige de forage (5).

8. Dispositif selon la revendication 1,
**caractérisé en ce que**
le système de lubrification (40) présente au moins une unité d'application pour appliquer un produit lubrifiant au moins sur la section de liaison (6) de l'élément de tige de forage (5).

9. Dispositif selon la revendication 1,
**caractérisé en ce que**
l'évidement (20) s'étend de manière transversale à travers le boîtier (12) depuis la première ouverture (17a) dans une première paroi latérale (16a) vers une deuxième ouverture (17b) dans une deuxième paroi latérale (16b),
**en ce que** lors de l'introduction de l'élément de tige de forage (5) dans l'évidement (20) par la première ouverture (17a), le système de lavage (30) est actionné et, lors de sa sortie de la deuxième ouverture (17b), le système de lavage (30) est arrêté, et
**en ce que** lors de l'introduction de l'élément de tige de forage (5) dans l'évidement (20) par la deuxième ouverture (17b), le système de lubrification (40) est actionné et, lors de sa sortie de la deuxième ouverture (17b), le système de lubrification (40) est à nouveau arrêté.

10. Installation de forage avec un mât de forage, le long duquel au moins un élément de tige de forage (5) est enfoncé au moyen d'un entraînement de forage dans le sol en formant un trou de forage et peut être retiré à nouveau hors du trou de forage après la réalisation du forage,
dans laquelle est prévu un système de manutention, avec lequel un élément de tige de forage (5) tiré peut être logé et peut être transporté de manière à s'éloigner du mât de forage,
un dispositif (10) selon la revendication 1 étant prévu.

11. Procédé pour nettoyer ou à lubrifier au moins une section de liaison (6) d'un l'élément de tige de forage avec un dispositif selon la revendication 1,
dans lequel une section de liaison (6) inférieure d'un élément de tige de forage (5) disposé de manière verticale est introduite par l'au moins une ouverture latérale (17a) dans l'au moins une paroi latérale (16a) du boîtier (12) dans l'évidement (20) de type canal, lequel s'étend horizontalement le long d'un côté supérieur (18) du boîtier (12), dans lequel au moins la section de liaison (6) de l'élément de tige de forage (5) est nettoyée au moyen d'un système de lavage (30) ou est lubrifiée au moyen d'un système de lubrification (40) dans l'évidement (20) de type canal.

12. Procédé selon la revendication 11,
**caractérisé en ce que**
au moins la section de liaison (6) de l'élément de tige de forage (5) entre dans l'évidement (20) de type canal par une première ouverture (17a) dans une première paroi latérale (16a) du boîtier (12) et est déplacée le long de l'évidement (20) de type canal et est nettoyée ou lubrifiée,
**en ce que** que l'élément de tige de forage (5) sort de l'évidement (20) de type canal au niveau d'une deuxième ouverture (17b) dans une deuxième paroi latérale (16b) du boîtier (12).

13. Procédé selon la revendication 11,
**caractérisé en ce que**
au moins la section de liaison (6) de l'élément de tige de forage (5) est pourvue après le lavage d'un produit lubrifiant.
